# EUROPÄISCHE PATENTANMELDUNG

(11) **EP 0 732 152 A1**
(43) Veröffentlichungstag der Anmeldung: **18.09.1996**
(21) Anmeldenummer: 96103518.5
(22) Anmeldetag: 07.03.1996
(51) Int. Cl.: B05C 5/02

(54) **Vorrichtung zum Auftragen von flüssigen Medien**

(30) Priorität: 15.03.1995 DE 29504451 U
(71) Anmelder: SCHIEFER, Rolf, D-41238 Mönchengladbach (DE)
(72) Erfinder: SCHIEFER, Rolf, D-41238 Mönchengladbach (DE)
(74) Vertreter: Bonsmann, Manfred, Dipl.-Ing.

(57) **Zusammenfassung**

Es wird eine Vorrichtung zum Auftragen von flüssigen Medien beschrieben. Die Vorrichtung weist einen Auftragsschlitz (5) auf, dessen Öffnungsweite durch den gegenseitigen Abstand seiner Längsränder festgelegt ist sowie Einrichtungen für die Zufuhr von Medium zum Auftragsschlitz (5). Zur Verbesserung bekannter derartiger Vorrichtungen ist die Öffnungsweite des Auftragschlitzes (5) zwischen einer maximalen Öffnungsweite und einer Schließstellung einstellbar. Die Vorrichtung ermöglicht einen exakten Abriß des Mediums bei Beendigung des Auftragvorganges. Weiterhin werden Maßnahmen beschrieben, welche sicherstellen, daß das Medium ausschließlich aus dem Auftragsschlitz austreten kann.

## Beschreibung

Die Erfindung betrifft eine Vorrichtung zum Auftragen von flüssigen Medien, mit einem Auftragsschlitz, dessen Öffnungsweite durch den gegenseitigen Abstand seiner Längsränder festgelegt ist, und mit Einrichtungen für die Zufuhr der Medien zum Auftragsschlitz.

Derartige Vorrichtungen werden vor allem zum breitflächigen Auftragen von flüssigen Medien verwendet. Bei den aufzutragenden flüssigen bzw. viskosen Medien kann es sich um beispielsweise Leime, Farben etc. handeln. Herkömmliche, als sogenannte "Breitschlitzdüsen" bekannte Vorrichtungen weisen einen Auftragsschlitz auf, der z.B. in einer in der Vorrichtung einklemmbaren Auftragsmaske ausgebildet und in seiner Öffnungsweite unveränderbar ist. Eine Veränderung der Öffnungsweite kann nur durch Wechseln der Auftragsmaske erfolgen. Während des Auftragens eines Mediums bleibt der Auftragsschlitz somit immer mit einer bestimmten Öffnungsweite geöffnet, wodurch eine Veränderung der Auftragsstärke beim Auftragen nicht möglich ist. Insbesondere kann beim Abschalten der Vorrichtung, beispielsweise bei einem intermittierenden Auftragen, das Medium je nach Viskosität unkontrolliert und unerwünscht aus dem Auftragsschlitz austreten. Ein exakter Abriß des austretenden Mediums zur gezielten bzw. gesteuerten Beendigung dessen Auftragens kann bei solchen Vorrichtungen nicht erreicht werden. Dieser ist aber beispielsweise erforderlich, wenn mittels der Vorrichtung ein Leimauftrag für die Anbringung von Etiketten erfolgen soll. Wird nämlich der Leim nicht nur in dem Bereich aufgetragen, welcher die Etiketten aufnimmt, sondern auch neben einem solchen Bereich, würden bei gestapelten Bögen diese miteinander verkleben.

Die Erfindung soll hier Abhilfe schaffen und eine solche Vorrichtung so verbessern, daß ein gezielter Auftrag von flüssigen bzw. viskosen Medien und insbesondere deren exakter Abriß bei Beendigung des Auftragens möglich ist.

Diese Aufgabe wird erfindungsgemäß dadurch gelöst, daß bei einer Vorrichtung der eingangs genannten Art wenigstens einer der Längsränder in Richtung auf den anderen verschiebbar ist.

Hierbei ist vorteilhaft, daß die Öffnungsweite des Auftragsschlitzes einstellbar ist. Damit ist zum einen vor Beginn des Auftragens eine exakte Festlegung der Auftragstärke bzw. Schichtdicke des aufzutragenden Mediums möglich, und zum anderen kann diese problemlos während des Auftragens des Mediums eine Anpassung an wechselnde Anforderungen erfolgen.

In weiterer Ausgestaltung der Erfindung sind die Längsränder in dichten Anlagekontakt miteinander bringbar. Der Auftragsschlitz ist auf diese Weise verschließbar und das Auftragen des Mediums kann gezielt beendet werden, so daß ein exakter Abriß des Mediums möglich ist und dessen Auftrag nur dort erfolgt, wo es gewünscht ist.

Vorzugsweise ist die Öffnungsweite des Auftragsschlitzes stufenlos einstellbar. Damit ist vom geschlossenen Zustand des Auftragsschlitzes bis zu dessen maximaler Öffnungsweite jeder beliebige Abstand zwischen den Längsrändern wählbar.

In einer weiteren vorteilhaften Ausbildung der Erfindung weist die Vorrichtung einen Grundkörper und eine relativ zu diesem verstellbare Leiste auf, wobei ein erster Längsrand des Auftragsschlitzes durch den Grundkörper und der gegenüberliegende, zweite Längsrand des Auftragschlitzes durch die Leiste gebildet wird. Da in diesem Fall nur die verstellbare Leiste zur Einstellung des Auftragsschlitzes bewegt werden muß, ist es möglich, die Betätigungsvorrichtung zum Einstellen der Öffnungsweite des Auftragsschlitzes relativ einfach zu gestalten.

Bevorzugt weisen die Einrichtungen für die Zufuhr des Mediums eine Vorverteilerkammer auf, die zwischen einander gegenüberliegenden Wänden des Grundkörpers und der Leiste angeordnet ist, mindestens eine Eintrittsöffung für das Medium aufweist und deren einzige Austrittsöffnung der Auftragsschlitz ist. Dabei ist vorteilhaft, daß sich das aufzutragende Medium innerhalb der Vorrichtung gleichmäßig verteilt und so bei Öffung des Auftragschlitzes gleichmäßig zwischen Grundkörper und Leiste heraustritt. Ferner wird, da der Auftragsschlitz die einzige Austrittsöffnung ist, jede unkontrollierte Abgabe des Mediums vermieden.

Vorteilhafterweise ist dabei zur Ausbildung der Vorverteilerkammer eine Vertiefung in besagter Wand des Grundkörpers ausgebildet. Dabei bildet ein Rand der Vertiefung den ersten Längsrand des Auftragschlitzes. Die Vertiefung erstreckt sich somit bis unmittelbar an den Auftragsschlitz, was eine gleichmäßige Abgabe des Mediums weiter fördert. Bei einem Schließen des Auftragschlitzes verbleiben keine Reste des Mediums in kleinen bzw. engen Zufuhreinrichtungen zum Auftragsschlitz, so daß diese auch bei längerem Nichtgebrauch nicht verstopfen.

In weiterer günstiger Ausgestaltung der Erfindung verläuft in besagter Wand des Grundkörpers um die Vertiefung herum und von dieser durch einen Steg getrennt von einem Auftragsschlitzende zum anderen eine Nut, die eine elastische, umlaufende Dichtung aufnimmt, wobei die Querschnittsformen der Nut und der Dichtung bei nichtkomprimierter Dichtung unterschiedlich sind, derart, daß die Dichtung in ihrem nichtkomprimierten Zustand mit einem oberen Teilbereich über die Oberkanten der Nut vorsteht und unter Dichtwirkung gegen die Leiste anliegt. In diesem Zustand sind freie Bereiche im Innenbereich der Nut vorhanden, und zwar zwischen der Innenoberfläche der Nut und der Außenoberfläche des in der Nut befindlichen unteren Teilbereiches der Dichtung. Bei durch Wirkung der Leiste komprimierter Dichtung werden die besagten freien Bereiche durch Aufnahme der dann in die Nut hineingedrückten oberen Teilbereiche der Dichtung ausgefüllt, so daß bei komprimiertem Zustand der Dichtung deren Querschnittsfläche der Querschnittsfläche der Nut entspricht.

Durch vorstehende Maßnahmen ist sichergestellt, daß auch bei vollständig geöffnetem Schlitz das aufzutragende Medium nur aus dem Auftragsschlitz nach außen heraustritt und nicht etwa seitlich. Bei geöffnetem Auftragsschlitz liegt die Dichtung wegen des über die Oberkanten der Nut vorstehenden oberen Teilbereiches nicht vollflächig gegen die Seitenwände und den Boden der Nut an. Da der geöffnete Auftragsschlitz für das Medium einen kleineren Durchflußwiderstand darstellt als der Durchflußwiderstand zwischen der Innenfläche der Nut und der Außenfläche der (nicht vollflächig) in der Nut anliegenden Dichtung, reicht die Dichtwirkung in diesem Betriebszustand aus, um ein Austreten von Medium außerhalb des Auftragsschlitzes zu verhindern. Dadurch, dadurch, daß bei komprimiertem Zustand der Dichtung deren Querschnittsfläche der Querschnittsfläche der Nut entspricht, liegt die Dichtung in diesem Betriebszustand vollflächig gegen die Innenoberfläche der Nut an, wodurch ein unkontrolliertes Austreten von Medium an der Dichtung vorbei bei geschlossenem Auftragsschlitz verhindert wird.

Vorzugsweise liegt bei geschlossenem Auftragsschlitz die Wand der Leiste zumindest teilweise auch am Steg an. Dabei ist die elastische Dichtung in die Nut zurückgedrückt und füllt diese im wesentlichen aus. Bei geschlossenem Auftragsschlitz ist dann die Vorverteilerkammer an ihren Rändern zum Teil durch den Steg abgeschlossen, was den Vorteil hat, daß die Dichtung bei eventuell agressiven aufzutragenden Medien möglichst wenig mit diesen in Kontakt kommt. Dadurch, daß bei geschlossenem Auftragsschlitz die Nut von der Dichtung ausgefüllt ist, liegt die Dichtung vollständig an den Wänden der Nut an, wodurch die Dichtwirkung erhöht ist.

In weiterer bevorzugter Ausgestaltung der Erfindung umfassen die Einrichtungen für die Zufuhr des Mediums im Grundkörper einen Eingangskanal, der in einen Vorverteilerkanal mündet, der wiederum über Verteilerkanäle mit der Vorverteilerkammer in Strömungsverbindung steht. Mit diesen Maßnahmen wird das Medium bereits vor Erreichen der Vorverteilerkammer in mehrere Einzelströme aufgeteilt, die eine gleichmäßige Verteilung des Mediums in der Vorverteilerkammer erleichtern.

Die Erfindung wird nachfolgend anhand der Zeichnung beispielshalber noch näher erläutert. Es zeigen:
- **Fig. 1**: eine Vorderansicht des Grundkörpers einer erfindungsgemäßen Vorrichtung;
- **Fig. 2**: eine Vorderansicht der zugehörigen Leiste;
- **Fig. 3**: eine Seitenansicht der Leiste aus Fig. 2;
- **Fig. 4**: eine Draufsicht auf eine erfindungsgemäße Vorrichtung bei geschlossenem Auftragsschlitz, mit dem Grundkörper und der Leiste aus den Fig. 1 bis 3, wobei die im Grundkörper und in der Leiste vorhandenen Bohrungen sowie die Halterung der Leiste am Grundkörper in gestrichelten Linien dargestellt sind;
- **Fig. 5**: einen Querschnitt längs Linie V-V der Vorrichtung aus Fig. 4;
- **Fig. 6**: eine der Fig. 4 ähnliche Draufsicht, jedoch bei geöffnetem Auftragsschlitz, und
- **Fig. 7**: einen der Fig. 5 ähnlichen Querschnitt längs Linie VII-VII in Fig. 6.

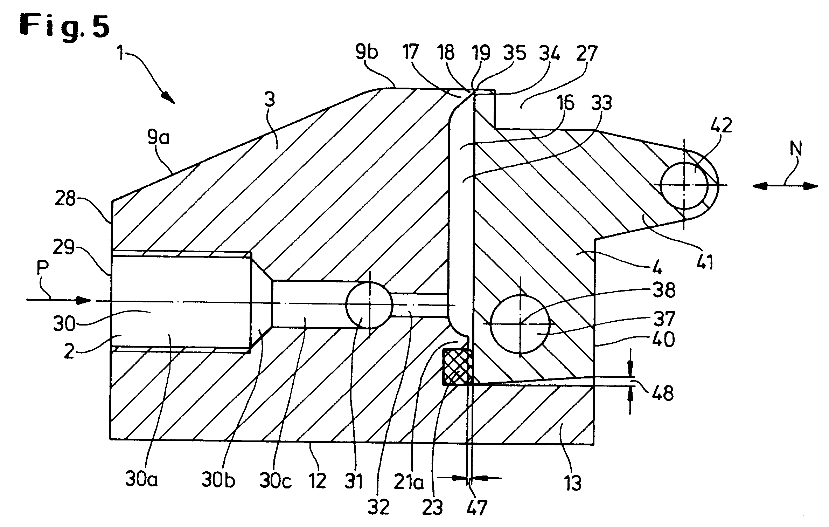

In den Figuren ist eine Vorrichtung 1 zum breitflächigen Auftragen von flüssigen bzw. viskosen Medien 2, wie z. B. Leimen, Farben etc., dargestellt. Die Vorrichtung 1 umfaßt einen Grundkörper 3 sowie eine an diesem verschwenkbar angebrachte Leiste 4, zwischen denen durch Verschwenken der Leiste 4 ein Auftragsschlitz 5 (Fig. 5) geöffnet und geschlossen werden kann, durch den das aufzutragende Medium 2 austritt.

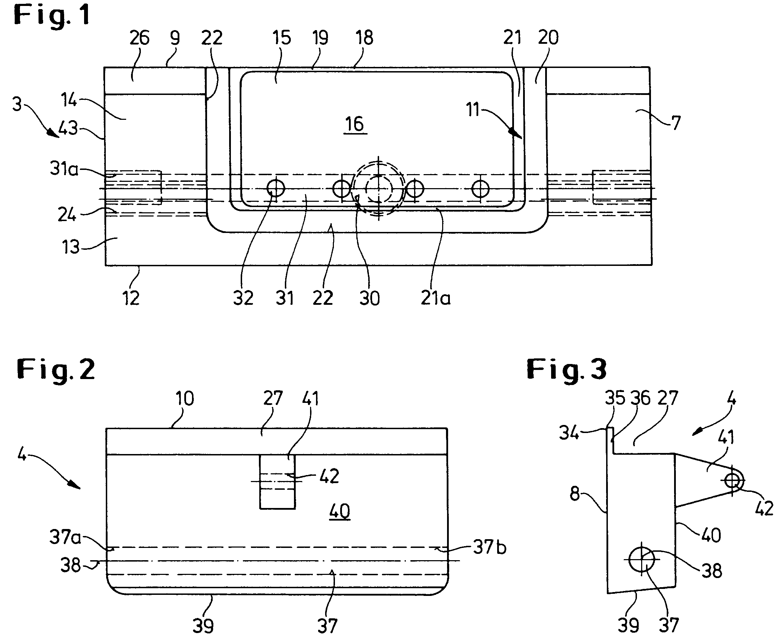

Grundkörper 3 und Leiste 4 weisen jeweils eine in etwa quaderförmige Gestalt mit einer gemeinsamen, senkrecht zum Auftragsschlitz 5 verlaufenden Symmetrieebene 6 auf, wobei im folgenden die der Leiste 4 zugewandte Seite des Grundkörpers 3 als dessen Vorderseite 7, die dem Grundkörper 3 zugewandte Seite der Leiste 4 als deren Rückseite 8 und die in den Fig. 1 bis 3, 5 und 7 obenliegenden, den Auftragsschlitz 5 bildenden Seiten des Grundkörpers 3 und der Leiste 4 als deren Oberseiten 9, 10 bezeichnet werden. Die Bezeichnung der übrigen Seiten ergibt sich entsprechend.

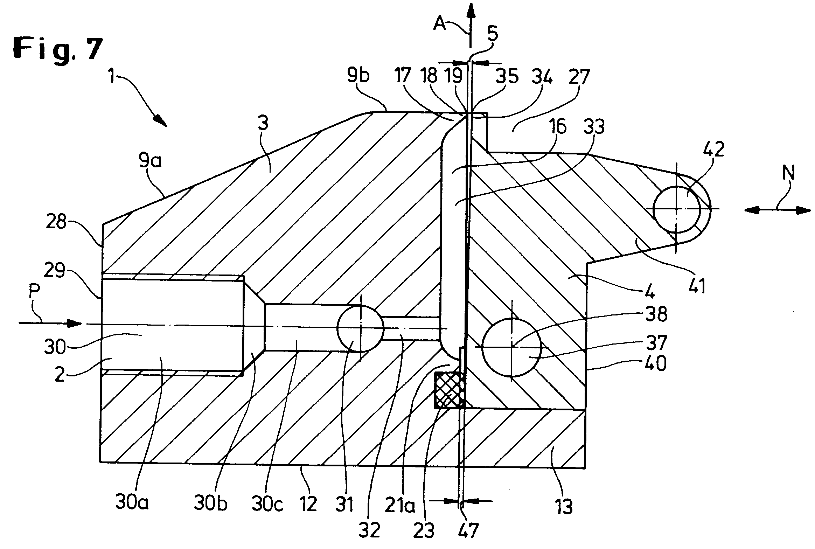

Der Grundkörper 3 weist an seiner Vorderseite 7 eine quaderförmige Ausnehmung 11 auf, in die die Leiste 4 eingesetzt ist. Die Ausnehmung 11 erstreckt sich beidseits der Symmetrieebene 6 von der Oberseite 9 des Grundkörpers 3 aus bis zu einer von diesem an dessen Unterseite 12 ausgebildeten Konsole 13 (Fig. 5 und 7) und wird seitlich von Seitenstegen 14 des Grundkörpers 3 begrenzt (Fig. 1, 4 und 6). Die in der Ausnehmung 11 zurückgesetzte, der eingebauten Leiste 4 gegenüberliegende Wand 15 des Grundkörpers 3 ist mit einer taschenförmigen, rechteckigen Vertiefung 16 versehen, die an der Oberseite 9 des Grundkörpers 3 beginnt und sich nach unten in Richtung auf die Konsole 13 etwa über 3/4 der Höhe der Ausnehmung 11 erstreckt. Der obere Randbereich 17 der Vertiefung 16 läuft unter einem Winkel geneigt geradlinig in die Oberseite 9 des Grundkörpers 3 aus und formt mit dieser Oberseite 9 eine schneidenförmige Kante 18, die einen ersten Längsrand 19 des Auftragsschlitzes 5 bildet und im Zusammenwirken mit der Leiste 4 einen exakten Abriß des aufzutragenden Mediums 2 beim Schließen des Auftragsschlitzes 5 ermöglicht. Um die rechteckige Vertiefung 16 herum verläuft U-förmig eine Nut 20 mit rechteckigem Querschnitt, die von der Vertiefung 16 durch einen Steg 21 getrennt ist. Die der Vertiefung 16 abgewandten Ränder 22 der Nut 20 werden von den Seitenstegen 14 und der Konsole 13 des Grundkörpers 3 gebildet. In die Nut 20 ist eine umlaufende, elastische Dichtung 23 mit runder Querschnittsfläche, eine sogenannte Rundschnurdichtung, eingelegt. Die Querschnittsfläche der Rundschnurdichtung 23 entspricht in ihrem komprimierten Zustand der Querschnittsfläche der Nut 20, wobei die Rundschnurdichtung 23 in nicht durch die Leiste 4 komprimiertem Zustand mit einem oberen Teilbereich so weit aus der Nut 20 bzw. über den Steg 21 herausragt, daß ihr Überstand über den Steg 21 mindestens gleich der maximalen Öffungsweite des Auftragschlitzes 5 ist. Im beschriebenen Ausführungsbeispiel beträgt die maximale Öffnungsweite des Auftragsschlitzes 5 5/10 mm und der Überstand der Rundschnurdichtung 23 6/10 mm bis 7/10 mm, so daß die Rundschnurdichtung 23 immer um mindestens 1/10 mm vorgespannt bleibt und unter Dichtwirkung gegen die Leiste 4 anliegt. Somit tritt bei geöffnetem Auftragsschlitz das aufzutragende Medium nur durch dieses aus. Im dargestellten Beispiel (Fig. 5 und 7) ist die Höhe des Stegabschnitts 21a, der die Basis des U bildet, d. h. der parallel zum Auftragschlitz 5 verläuft, geringer als die Höhe des oberen, den ersten Längsrand 19 des Auftragsschlitzes 5 bildenden Randes 17.

Die seitlich von der Ausnehmung 11 angeordneten Seitenstege 14 des Grundkörpers 3 werden jeweils parallel zum Auftragsschlitz 5 von einer Bohrung 24 durchlaufen, die mit einem Gewinde versehen ist, in das ein Haltebolzen 25 mit Außengewinde zur Halterung der Leiste 4 am Grundkörper 3 eingeschraubt werden kann. Die Seitenstege 14 sind auf ihrer Oberseite 9 jeweils mit einer Aussparung 26 versehen, die parallel zum Auftragsschlitz 5 jeweils auf der gesamten Breite der Seitenstege 14 ausgebildet sind und bei geschlossenem Auftragsschlitz 5 in etwa mit einer entsprechenden Aussparung 27 auf der Oberseite 10 der Leiste 4 fluchten.

An seiner Oberseite 9 weist der Grundkörper 3 im rückwärtigen Bereich eine Abschrägung 9a auf, so daß der Bereich 9b unmittelbar hinter dem ersten Längsrand 19 der höchstgelegene Bereich der Oberseite 9 des Grundkörpers 3 ist.

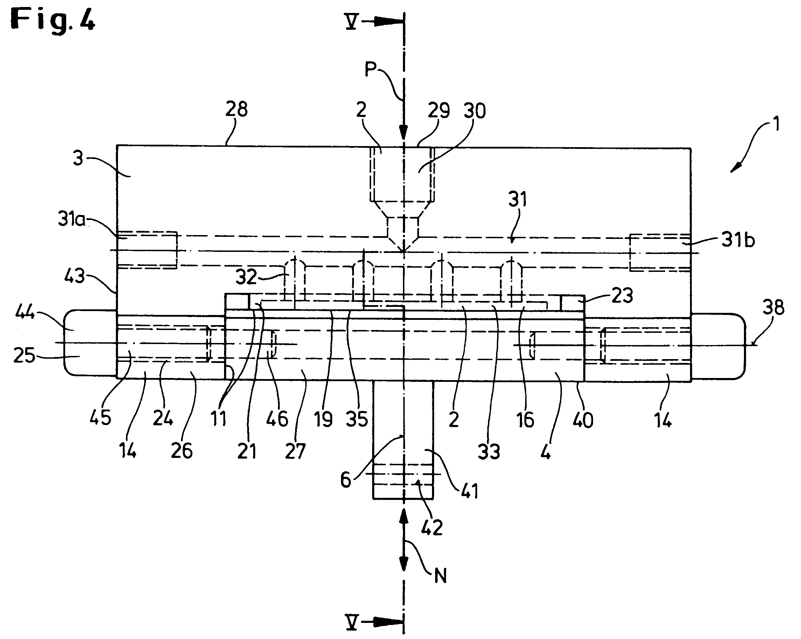

Die Rückseite 28 des Grundkörpers 3 weist eine kreisförmige Eingangsöffnung 29 auf, durch die das aufzutragende Medium 2 einem Eingangskanal 30 in Richtung des in den Fig. 4 bis 7 dargestellten Pfeils P zugeführt wird. Der Eingangskanal 30 besteht aus zwei zylindrischen Abschnitten 30a, 30c unterschiedlichen Durchmessers, die durch einen kegelstumpfförmigen Abschnitt 30b miteinander verbunden sind. Alle drei Abschnitte 30a, 30b, 30c sind zueinander koaxial angeordnet. Der erste Abschnitt 30a beginnt unmittelbar an der Eingangsöffnung 29, weist den größeren Durchmesser auf und ist mit einem Innengewinde versehen, in das ein mit einem Außengewinde versehenes (nicht dargestelltes) Element eingeschraubt werden kann, um das aufzutragende Medium 2 in den Grundkörper 3 einzuleiten. An diesen ersten Abschnitt 30a schließt sich der kegelstumpfförmige Abschnitt 30b an, dessen mit dem kleineren Durchmesser versehene Seite mit dem dritten Abschnitt 30c des Eingangskanals 30 verbunden ist. Dieser Abschnitt 30c des Eingangskanals 30 mündet in einen quer zum Eingangskanal 30 bzw. parallel zum Auftragsschlitz 5 verlaufenden Vorverteilerkanal 31, dessen Durchmesser gleich dem des dritten Abschnitts 30c des Eingangskanals 30 ist. Der Vorverteilerkanal 31 durchläuft den Grundkörper 3 auf dessen gesamter Länge und ist an seinen beiden Enden 31a, 31b mit einem Gewinde versehen. In diese Enden 31a, 31b ist jeweils ein (nicht dargestellter) Stopfen eingeschraubt, der ein Ausfließen des eingeleiteten Mediums 2 aus dem Vorverteilerkanal 31 verhindert, der aber auch entfernt werden kann, um beispielsweise nach Gebrauch der Vorrichtung 1 diese zu reinigen. Denkbar ist aber auch, daß in diese Enden 31a, 31b weitere Elemente zur Zuführung des aufzutragenden Mediums 2 eingeschraubt werden, um die gleichmäßige Verteilung des Mediums 2 zu erleichtern. Der Vorverteilerkanal 31 seinerseits ist über mehrere, im dargestellten Beispiel vier, in Richtung des Eingangskanals 30 verlaufende Verteilerkanäle 32, deren Durchmesser jeweils kleiner als der des Vorverteilerkanals 31 ist, mit der Vertiefung 16 an der Vorderseite 7 des Grundkörpers 3 verbunden. Die Verteilerkanäle 32 münden in den unteren Bereich der Vertiefung 16.

In den Fig. 2 und 3 ist die Leiste 4 dargestellt. Ihre Rückseite 8 ist als ebene Wand ausgebildet und legt im Zusammenwirken mit der Vertiefung 16 auf der Vorderseite 7 des Grundkörpers 3 sowie mit der Rundschnurdichtung 23 eine Vorverteilerkammer 33 fest. Die obere Kante 34 dieser Wand bildet den zweiten Längsrand 35 des Auftragsschlitzes 5 und liegt im eingebauten Zustand der Leiste 4 dem ersten, vom Grundkörper 3 ausgebildeten Längsrand 19 gegenüber. Der obere Abschnitt der Wand wird durch einen Fortsatz 36 gebildet, der sich als schmaler Steg auf der Oberseite 10 der Leiste 4 über deren gesamte Länge erstreckt und so die Aussparung 27 festlegt, die im wesentlichen mit den Aussparungen 26 auf der Oberseite 9 der Seitenstege 14 fluchten. Im unteren Bereich der Leiste 4 ist eine über deren gesamte Länge durchlaufende Bohrung 37 angeordnet, in deren Enden 37a, 37b jeweils ein Haltebolzen 25 eingesetzt wird, um eine Verschwenkachse 38 für die Leiste 4 auszubilden. Die Unterseite 39 der Leiste 4 ist von deren Rückseite 8 zur Vorderseite 40 hin nach oben geneigt. An der Vorderseite 40 der Leiste 4 ist bündig mit deren Oberseite 10 eine Lasche 41 angebracht, die von einer Bohrung 42 zur Befestigung (nicht dargestellten) einer Betätigungseinrichtung zum Verstellen der Leiste 4 durchlaufen wird.

Zum Zusammenbau der Vorrichtung 1 wird die Leiste 4 in die Ausnehmung 11 des Grundkörpers 3 so eingesetzt, daß die Bohrungen 24 in den Seitenstegen 14 des Grundkörpers 3 mit der Bohrung 37 im unteren Bereich der Leiste 4 fluchten. Dabei kommt die Leiste 4 mit der Rundschnurdichtung 23 in einen dichtenden Berührungskontakt, wodurch die Rundschnurdichtung 23 in die Nut 20 zurückgedrückt und vorgespannt wird. Zur Halterung der Leiste 4 wird von den Außenseiten 43 des Grundkörpers 3 her jeweils ein Haltebolzen 25 in die Bohrung 24 der Seitenstege 14 eingeführt. Der Haltebolzen 25 weist einen Kopf 44 auf, der bei vollständig eingesetztem Haltebolzen 25 an der Außenseite 43 des Grundkörpers 3 anliegt. An den Bolzenkopf 44 schließt sich ein erster, mit einem Außengewinde versehener Bolzenabschnitt 45 an, der in das Gewinde der Bohrung 24 der Seitenstege 14 eingeschraubt wird. Von diesem ersten Bolzenabschnitt 45 aus erstreckt sich koaxial ein zweiter, glatter, d. h. nicht mit einem Gewinde versehener Bolzenabschnitt 46, der sich von der Bohrung 24 im Seitensteg 14 bis in die Bohrung 37 der Leiste 4 hineinerstreckt und so die Verschwenkverbindung zwischen Grundkörper 3 und Leiste 4 ausbildet. Die Betätigung der Leiste 4 kann z. B. über (nicht dargestellte) mechanische Einrichtungen erfolgen, wie z. B. durch eine Pneumatikkolbenanordnung oder hydraulische Betätigungsmittel wie auch durch eine federbetätigte Einrichtung, die sämtlich in Richtung des in den Fig. 4 bis 7 dargestellten Doppelpfeils N wirken.

In den Fig. 4 und 5 ist die Vorrichtung 1 mit geschlossenem Auftragsschlitz 5 dargestellt. Der Auftragsschlitz 5 wird dadurch geschlossen, daß sein zweiter Längsrand 35, d. h. der obere Rand 34 der Leiste 4, an dem ersten Längsrand 19 bzw. dem oberen Rand 18 der im Grundkörper 3 ausgebildeten Vertiefung 16 zur dichten Anlage kommt, wobei durch die schneidenartige Ausbildung des ersten Längsrands 19 das aufzutragende Medium 2 wie mit einem Messer beim Schließen des Auftragsschlitzes 5 durchschnitten und somit ein exakter Abriß des aufzutragenden Mediums 2 erreicht wird. Die umlaufende, elastische Rundschnurdichtung 23 ist auf ihrer gesamten Länge durch die Leiste 4 in die Nut 20 zurückgedrückt worden und füllt diese aus, so daß die elastische Rundschnurdichtung 23 in diesem Zustand die rechteckige Form der Nut 20 angenommen hat und somit infolge der flächigen Anlage der komprimierten Dichtung gegen die Seitenwände und den Boden der Nut 20 die Dichtwirkung im Vergleich zu der Situation bei geöffnetem Auftragsschlitz 5, bei der die Dichtung nicht vollflächig anliegt, erhöht ist. Der Stegabschnitt 21a, der den unteren, parallel zum Auftragsschlitz 5 verlaufenden Abschnitt der Rundschnurdichtung 23 von der Vertiefung 16 trennt, liegt nicht an der Leiste 4 an, sondern läßt einen geringen Spalt 47 frei, so daß die Bewegungsfreiheit der Leiste 4 bei deren Verschwenken nicht behindert wird. Da die Verschwenkachse 38, die durch die Bohrungen 24, 37 in den Seitenstegen 14 des Grundkörpers 3 und in der Leiste 4 sowie durch die Haltebolzen 25 ausgebildet wird, etwas oberhalb des unteren Steges 21a angeordnet ist, wandert beim Verschwenken der Leiste 4 der unterhalb der Verschwenkachse 38 liegende Teil der Leiste 4 zu diesem Stegabschnitt 21a hin aus und der an der Rundschnurdichtung 23 anliegende Bereich der Leiste 4 wandert geringfügig in die Nut 20 hinein. In Fig. 4 ist zu erkennen, daß die Leiste 4 und der Steg 21 bei geschlossenem Auftragsschlitz 5 in ihrem oberen Bereich aneinander liegen, so daß in diesem Bereich die Rundschnurdichtung 23 bei geschlossenem Auftragsschlitz 5 nicht mit dem Medium 2 in Berührung ist. Die geneigte Unterseite 39 der Leiste 4 gibt zwischen sich und der Konsole 13 des Grundkörpers 3 einen zur Vorderseite 40 der Leiste 4 hin öffnenden, keilförmigen Spalt 48 frei.

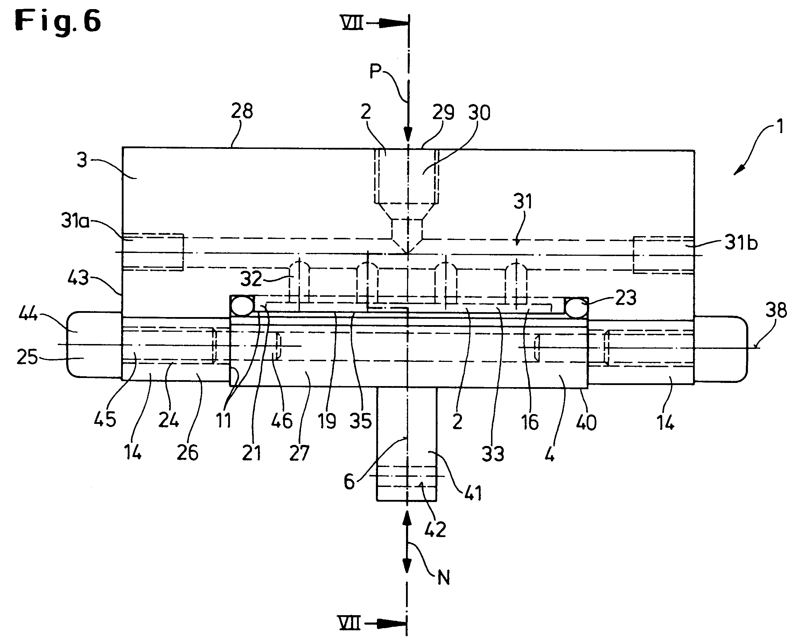

Die Vorrichtung 1 mit geöffnetem Auftragsschlitz 5 ist in den Fig. 6 und 7 dargestellt. In diesem Zustand tritt das aufzutragende Medium 2 in Richtung des Pfeils A (Fig. 7) aus. Der unterhalb der Verschwenkachse 38 liegende Teil der Leiste 4 ist etwas zum Grundkörpers 3 hin ausgewandert, so daß in diesem Bereich der Abstand zu dem die Vertiefung 16 umlaufenden Steg 21 etwas verringert ist und der an der Rundschnurdichtung 23 anliegende Teil der Leiste 4 etwas in die Nut 20 eingedrungen ist. Infolge der Verschwenkung der Leiste 4 ist der keilförmige Spalt 48 zwischen der Unterseite 39 der Leiste 4 und der Konsole 13 des Grundkörpers 3 geschlossen.

In der in Fig. 7 dargestellten Draufsicht auf die Vorrichtung 1 ist zu erkennen, daß bei geöffnetem Auftragsschlitz 5 die elastische Rundschnurdichtung 23 bestrebt ist, ihre runde Ausgangsform wieder anzunehmen, wobei sie aber stets mit ihrem oberen Teilbereich an der Leiste 4 anliegt, so daß auch bei geöffnetem Auftragsschlitz 5 eine einwandfreie Abdichtung der Querränder 49 gewährleistet ist und das aufzutragende Medium 2 ausschließlich durch den Auftragsschlitz 5 austreten kann. Der Auftragsschlitz 5 erstreckt sich dabei seitlich über die die Vertiefung 16 begrenzenden Stegabschnitte 21 hinweg bis zu der Rundschnurdichtung 23, die die Enden bzw. Querränder 49 des Auftragsschlitzes 5 ausbilden.

## Patentansprüche

1. Vorrichtung zum Auftragen von flüssigen Medien, mit einem Auftragsschlitz, dessen Öffnungsweite durch den gegenseitigen Abstand seiner Längsränder festgelegt ist, und mit Einrichtungen für die Zufuhr der Medien zum Auftragsschlitz, dadurch gekennzeichnet, daß wenigstens einer der Längsränder (19, 35) in Richtung auf den anderen (35, 19) verschiebbar ist.

2. Vorrichtung nach Anspruch 1, dadurch gekennzeichnet, daß die Längsränder (19, 35) in dichten Anlagekontakt miteinander bringbar sind.

3. Vorrichtung nach einem der Ansprüche 1 bis 2, dadurch gekennzeichnet, daß sie einen Grundkörper (3) und eine relativ zu diesem verstellbare Leiste (4) aufweist, wobei ein erster Längsrand (19) des Auftragsschlitzes (5) durch den Grundkörper (3) und der gegenüberliegende, zweite Längsrand (35) des Auftragsschlitzes (5) durch die Leiste (4) gebildet wird.

4. Vorrichtung nach einem der Ansprüche 1 bis 3, dadurch gekennzeichnet, daß die Einrichtungen für die Zufuhr des Mediums eine Vorverteilerkammer (33) aufweisen, welche mindestens eine Eintrittsöffnung für das Medium aufweist und deren einzige Austrittsöffnung der Auftragsschlitz (5) ist.

5. Vorrichtung nach Anspruch 4, dadurch gekennzeichnet, daß zur Ausbildung der Vorverteilerkammer (33) eine Vertiefung (16) in besagter Wand (7) des Grundkörpers (3) ausgebildet ist, wobei ein Rand (17, 18) der Vertiefung (16) den ersten Längsrand (19) des Auftragsschlitzes (5) bildet.

6. Vorrichtung nach Anspruch 5, dadurch gekennzeichnet, daß um die Vertiefung (16) herum und von dieser durch einen Steg (21) getrennt eine Nut (20) verläuft, die eine elastische Dichtung (23) aufnimmt, und die Querschnittsformen der Nut (20) und der Dichtung (23) bei nichtkomprimierter Dichtung unterschiedlich sind, derart, daß die Dichtung in ihrem nicht komprimierten Zustand mit einem oberen Teilbereich über die Oberkanten der Nut (20) vorsteht und unter Dichtwirkung gegen die Leiste (4) anliegt, und gleichzeitig im Inneren der Nut (20) freie Bereiche zwischen der Innenoberfläche der Nut und der Außenoberfläche des in der Nut befindlichen unteren Teilbereichs der Dichtung vorhanden sind, und daß bei durch Wirkung der Leiste (4) komprimierter Dichtung (23) besagte freie Bereiche durch Aufnahme der dann in die Nut hineingedrückten oberen Teilbereiche der Dichtung ausgefüllt sind, so daß bei komprimiertem Zustand der Dichtung deren Querschnittsfläche der Querschnittsfläche der Nut entspricht.

7. Vorrichtung nach Anspruch 6, dadurch gekennzeichnet, daß der erste Längsrand (19) des Auftragsschlitzes (5) und der Steg (21) in einer Ebene liegen.

8. Vorrichtung nach einem der Ansprüche 1 bis 7, dadurch gekennzeichnet, daß die Einrichtungen für die Zufuhr des Mediums im Grundkörper (3) mindestens einen Eingangskanal (30) aufweisen, der in einen Vorverteilerkanal (31) mündet, der wiederum über Verteilerkanäle (32) mit der Vorverteilerkammer (33) in Strömungsverbindung steht.
